(19) Europäisches Patentamt
European Patent Office
Office européen des brevets

(11) EP 4 726 609 A1

## (12) EUROPEAN PATENT APPLICATION

(43) Date of publication:
15.04.2026 Bulletin 2026/16

(21) Application number: 25208097.3

(22) Date of filing: 10.10.2025

(51) International Patent Classification (IPC):
G06N 3/084 (2023.01)    G06N 20/00 (2019.01)

(52) Cooperative Patent Classification (CPC):
G06N 20/00; G06N 3/08; G06N 3/084

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 11.10.2024 GR 20240100719

(71) Applicant: GOOGLE LLC
Mountain View CA 94043 (US)

(72) Inventors:
• KRICHENE, Walid
  Mountain View, 94043 (US)
• MU, Yarong
  Mountain View, 94043 (US)
• SMITH, Adam Davison
  Mountain View, 94043 (US)
• SONG, Shuang
  Mountain View, 94043 (US)
• STEINKE, Thomas Alexander
  Mountain View, 94043 (US)
• GUHA THAKURTA, Abhradeep
  Mountain View, 94043 (US)
• TERZIS, Andreas
  Mountain View, 94043 (US)
• ZHENG, Xinyi
  Mountain View, 94043 (US)

(74) Representative: Marks & Clerk GST
1 New York Street
Manchester M1 4HD (GB)

## (54) DIFFERENTIALLY PRIVATE CONFIDENTIAL JOINING OF DATA IN MODEL TRAINING

(57) Methods, systems, and apparatus, including computer programs encoded on a computer storage medium, for training machine learning models using data of multiple entities without compromising the precise joining/alignment of the data. In one aspect, a method includes obtaining two or more datasets, wherein each dataset is received from a different entity that maintains the dataset. The two or more datasets are joined using a set of keys. A loss function for training a machine learning model is generated based on inputs comprising the joined two or more datasets, the machine learning model including multiple model parameters. Noise is injected into one or more derivatives computed from the loss function, the inputs, or both. The model parameters are updated using the noised one or more derivatives.

FIG. 1

EP 4 726 609 A1

**Description**

TECHNICAL FIELD

This specification relates to artificial intelligence and privacy-enhancing and security-enhancing training and deployment of machine learning models.

BACKGROUND

Machine learning is a type of artificial intelligence that aims to teach computers how to learn and act without necessarily being explicitly programmed. More specifically, machine learning is an approach to data analysis that involves building and adapting models, which allow computer executable programs to "learn" through experience. Machine learning involves design of algorithms that use training data to adapt their models to improve their ability to make predictions. For example, during model training using a set of training data, rules or relationships can be identified, and used to configure the weights for the various parameters of the machine learning model. Then, using a new set of data, the trained machine learning model can generate a prediction or inference based on the identified rules or relationships. Machine learning models can be applied to a variety of applications, such as search engines, medical diagnosis, natural language modeling, autonomous driving, etc.

SUMMARY

This document describes techniques that enable multiple data owners to pool their data collaboratively to train machine learning models without compromising the precise joining/alignment of their data at the joining unit level. Data owners frequently use their proprietary data to make data-driven decisions (e.g., for product and service improvements), for research and development, and for many other purposes. Multiple data owners often seek to leverage each other's data to gain insights for research, decision making, and other purposes while maintaining the confidentiality of individual data points. For example, the data owners' data can be used to train machine learning models, e.g., deep learning models, to make predictions or classifications based on pooled input data.

In general, one innovative aspect of the subject matter described in this specification can be embodied in methods that include the actions of obtaining two or more datasets, wherein each dataset is received from a different entity that maintains the dataset; joining the two or more datasets using a set of keys; generating a loss function for training a machine learning model based on inputs comprising the joined two or more datasets, the machine learning model comprising a plurality of model parameters; injecting noise into one or more derivatives computed from the loss function, the inputs, or both, wherein each derivative of the one or more derivatives is a derivative derived using a joining of the two or more datasets; and updating the plurality of model parameters using the noised one or more derivatives. Other implementations of this aspect include corresponding apparatus, systems, and computer programs, configured to perform the aspects of the methods, encoded on computer storage devices.

These and other embodiments can each optionally include one or more of the following features. In some aspects, the one or more derivatives include (i) one or more noised gradients, (ii) one or more sufficient statistics, or both (i) and (ii).

Some aspects include clipping at least one of the one or more derivatives.

In some aspects, injecting noise into one or more derivatives includes computing a noise matrix using matrix factorization. Injecting the noise can include applying the noise matrix to one or more of (i) a loss matrix, (ii) a gradient matrix, (iii) a covariance matrix, or (iv) vectors that represent the two or more datasets. The covariance matrix represents a sensitivity polytype.

In some aspects, injecting the noise includes computing a first sensitivity matrix for covariance; computing a second sensitivity matrix for linear; and applying noise to the first sensitivity matrix and to the second sensitivity matrix. Updating the plurality of model parameters can include updating the model parameters based on the noised first matrix and the noised second matrix.

In some aspects, each dataset of the two or more datasets includes recordings that include user data and the set of keys comprises user identifiers.

In some aspects, injecting noise into one or more derivatives computed from the loss function, the inputs, or both includes computing first sufficient statistics using a first dataset of the two or more datasets; computing second sufficient statistics using a second dataset of the two or more datasets; computing third sufficient statistics using both the first dataset and the second dataset; injecting noise into the third sufficient statistics without injecting noise into the first or second sufficient statistics.

In some aspects, injecting noise into one or more derivatives computed from the loss function, the inputs, or both includes computing first derivatives of the one or more derivatives using a first dataset of the two or more datasets;

computing second derivatives of the one or more derivatives using a second dataset of the two or more datasets; computing third derivatives of the one or more derivatives using both the first dataset and the second dataset; injecting noise into the third derivatives without injecting noise into the first or second derivatives.

Particular embodiments of the subject matter described in this specification can be implemented so as to realize one or more of the following advantages. The techniques described in this document enable the training and use of machine learning models based on the data of multiple data owners while ensuring confidentiality (e.g., data owners cannot access the joined or aligned data) and privacy (e.g., by enabling training using contributed data while protecting the precise joining or alignment of the data owned by different entities). That is, the machine learning models can be trained using datasets of multiple data owners and used in ways that prevent the data owners or others from learning which records of one data owner are mapped to which records of the other data owner(s). For example, the described techniques can combine the use of clean room data storage and processing (e.g., within a trusted execution environment (TEE)) with machine learning techniques that ensure differential privacy to achieve both confidentiality and privacy. The techniques enable confidentiality and privacy while adding much less noise into the computation than would be necessary with existing techniques, such as Differentially Private Stochastic Gradient Descent (DP-SGD). Consequently, the resulting models are far more accurate while still preserving privacy and data security.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example environment in which a model training system trains machine learning models based on joined data while protecting the precise joining of the data.

FIGS. 2A and 2B are diagrams that illustrate user-level privacy in joined data.

FIGS. 3A and 3B are diagrams that illustrate event-level privacy in joined data.

FIG. 4 is a flow chart of an example process of training a machine learning model using joined data while protecting the precise joining of the data.

FIG. 5 is a block diagram of an example computer.

Like reference numbers and designations in the various drawings indicate like elements.

DETAILED DESCRIPTION

This document describes techniques that enable multiple data owners to pool their data collaboratively to train machine learning models without revealing the precise joining/alignment of their data at the joining unit, e.g., at the row, half row, or multiple rows, level. This prevents entities that have access to the trained model from learning the precise joining of the data by evaluating the model itself or by running experiments by providing various inputs to the model and evaluating the outputs of the model. To provide such protection, noise can be added to the joined data, the gradients, the sufficient statistics, and/or other statistics derived from the joined data as part of the model training process. To ensure that the output of the model retains high accuracy, such noise may be added to the sufficient statistics derived from the joined data but not to the joined data itself (i.e., the data that is joined). Adding noise to the sufficient statistics rather than the joined data improves the accuracy of the trained model, while still ensuring a target level of differential privacy.

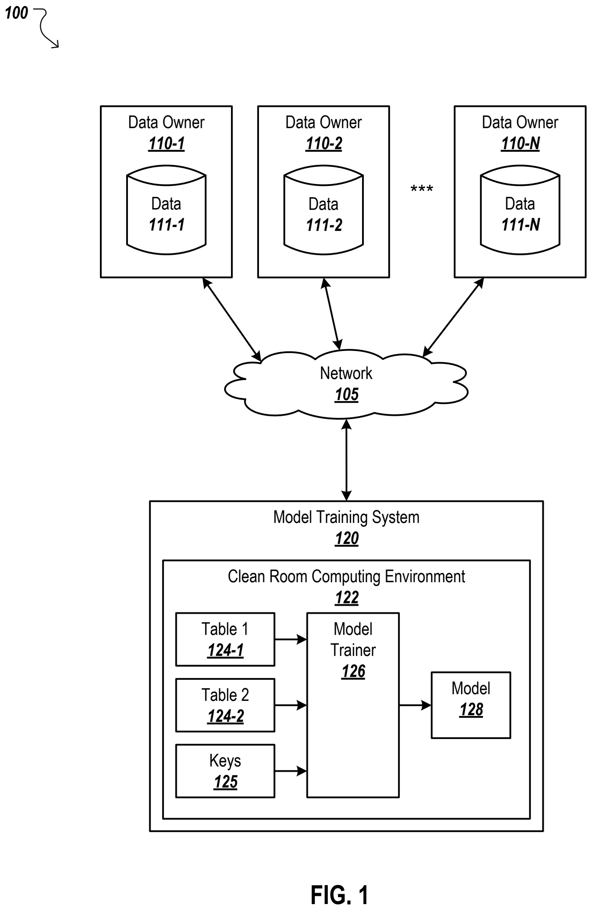

FIG. 1 is a block diagram of an example environment 100 in which a model training system 120 trains machine learning models 128 based on joined data while protecting the precise joining of the data. The example environment 100 includes a network 105, such as a local area network (LAN), a wide area network (WAN), the Internet, or a combination thereof. The network 105 connects the model training system 120 with any number of data owners 110 (e.g., data owners 110-1 to 110-N, where N is any integer).

Each data owner 110 is an entity that collects data and/or generates datasets 111. The datasets 111 can include data that is used to train machine learning models, e.g., machine learning model 128. For example, one data owner 110-1 may be a medical company that maintains patient data related to a first condition and another data owner 110-2 may be a different medical company that maintains patient data related to a second condition. This data can be joined, e.g., by patient identifiers, and used by the model training system 120 to train a machine learning model 128 based on the two conditions such that the joining of the data for the two conditions is protected, e.g., such that with some differential privacy guarantee, the joining of a given patient's data for the two conditions cannot be detected. This means that the medical company 110-1 will not know if a given patient of theirs has the condition treated by the medical company 110-2, and vice versa. However, the medical companies may be able to use the trained machine learning model 128 resulting from the combination of the datasets 111-and 111-2 to learn about correlations (or other data and/or statistics) between the two conditions.

Although there are many uses of this technology, there are some situations in which these technologies are useful in online environments. First, consider two entities A and B that have data about transactions on their websites, and a third entity C that has information about the link between these transactions (that is, which ones were performed by the same real-life person). The third entity C could be the users themselves, for example, if information is stored on their devices. If A and B wish to learn information about the relations between the transactions, then they can use the described technologies: C can contribute the joining information to a clean room computing environment 122 of the model training system 120, and A and B can analyze the joined dataset while limiting information revealed about any individual, e.g., while limiting A and B from learning which user of A's dataset is mapped to which user of B's dataset.

As another example, consider two entities A and B that have data about transactions on their websites. Suppose there is information in their datasets to link the two datasets, but that performing such a linking exactly violates user privacy or other agreements. They could then share the certain parts of the data with each other but only perform linking inside the clean room computing environment 122. The described techniques would allow the entities to learn global statistics about the linking without, say, A learning which of B's records correspond to each of A's records and vice versa.

In a particular version of this example, users may view digital components at publisher sites, but perform specified actions (e.g., conversion actions) at landing pages linked to by the digital components. As used throughout this document, the phrase "digital component" refers to a discrete unit of digital content or digital information (e.g., a video clip, audio clip, multimedia clip, gaming content, image, text, bullet point, artificial intelligence output, language model output, or another unit of content). A digital component can electronically be stored in a physical memory device as a single file or in a collection of files, and digital components can take the form of video files, audio files, multimedia files, image files, or text files and include advertising information, such that an advertisement is a type of digital component.

An entity that distributes the digital component can measure the performance of digital components based on views and/or interactions with the digital components at the publisher sites and the actions that occur at the landing pages. Traditionally, the data on the various sites can be correlated using third-party cookies. However, absent sufficient safeguards, such cookies can enable entities to track users across the various sites without user consent and/or to perform malicious actions. Thus, some browsers and other applications are deprecating and/or reducing the use of third-party cookies. The techniques described in this document enable the joining of event data at publisher sites with event data at landing pages and training of machine learning models using such joined data in ways that protect the precise joining of the data for each user. For example, the techniques can be used to join impressions (e.g., presentations of) digital components with conversions (e.g., occurrences of specified events following the presentations) of digital components in a privacy preserving manner. Thus, the described techniques enhance user privacy and data security while also providing an accurate model training solution that works in the absence of third-party cookies.

The outcome in both of these website examples is that both entities gain insights without gaining additional knowledge of whether specific end users have corresponding data points in the other entity's dataset. This applies regardless of whether the entities share all, partial, or piece-wise knowledge about their end users. Thus, information about individual users is protected while enabling meaningful and accurate evaluations of the combined data. For example, neither entity can learn whether a given user is interested in a given digital component because neither entity can learn that the given user both saw the digital component and performed the conversion action associated with the digital component since the linkage between the two datasets is protected using the described techniques.

The model training system 120 includes the clean room computing environment 122 in which data of multiple data owners 110 is joined and used to train a machine learning model 128. A clean room computing environment 128 typically uses specialized hardware and/or software to protect the security and privacy of data and to ensure only approved (e.g., attested to) software is run within the clean room computing environment 128. For example, a trusted execution environment (TEE) provides a secure environment for computation and is sometimes implemented as a secure area of a main processor. A TEE can guarantee that code and data loaded inside the TEE are protected with respect to integrity and confidentiality. Integrity indicates that unauthorized entities cannot alter code and/or data within the TEE, and confidentiality indicates that unauthorized entities cannot read code and/or data within the TEE. The clear room computing environment 128 can include or be implemented in the form of a TEE.

The model training system 120 also includes a model trainer 126 that runs within the clean room computing environment 122. The model training system 120 can include software and/or hardware configured to join data, e.g., tables 124-1 and 124-2, and train machine learning models 128 using the joined data. Each table 124-1 and 124-2 can be a dataset 111 or a portion (i.e., less than all) of a dataset 111 received from a data owner 110. For example, the table 124-1 can be the dataset 111-1 received from the data owner 110-1 and the table 124-2 can be the dataset 111-2 received from the data owner 110-2. Although two tables are shown in FIG. 1, the model trainer 126 can be configured to join data of more than two data owners and train machine learning models 128 using such joined data. In addition, the data to be aligned and used to train the model 128 can be stored in different types of data structures rather than or in addition to tables.

The model trainer 126 can join the data of the tables 124-1 and 124-2 using keys 125. A key 125 can be a piece of data that enables the model trainer 126 to identify data in the table 124-1 that is for a same item or individual as data in the table 124-2. For example, a key 125 can be a user identifier if the data of the tables 124-1 and 124-2 include data about users of websites or other applications. The keys 125 can be part of the table 124-1 and/or the table 124-2. In another example, the keys 125 can be received from another entity, e.g., another data owner 110. In such examples, the keys 125 can link to information in each table 124-1 and 124-2.

Some or all of the tables 124 used to train a machine learning model 128 can be public data meaning that each other data owner 110 can know the data in the public table, just not the joining of the tables 124 used to train the model 128. For example, if the table 124-1 is provided by data owner 110-1 and is a public table, the data owner 110-2 that provides table 124-2 can know the contents of the table 124-1. However, the data owners 110-1 and 110-2 may not be able to know how the tables 124-1 and 124-2 are aligned, e.g., based on agreements between the data owners 110-1 and 110-2 or to protect the security and/or privacy of the data for other reasons.

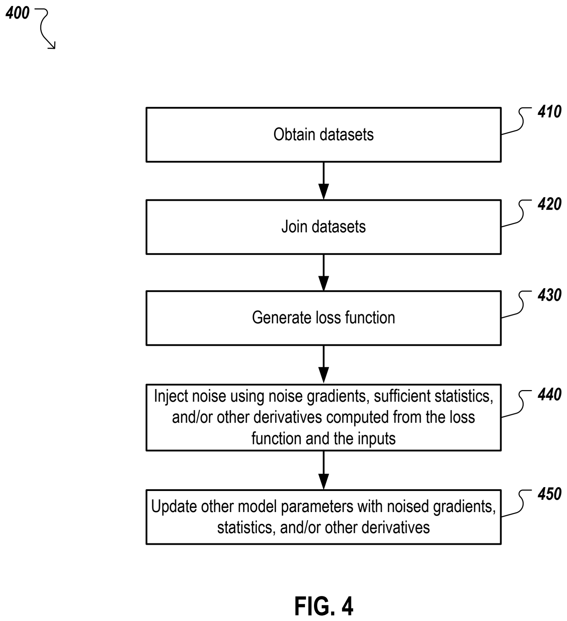

The model trainer 126 can train various types of machine learning models 128 using joined data while protecting the joining of the data. For example, the model trainer 126 can train linear regression models, logistic regression, other types of regression models, deep learning models (e.g., neural networks), support vector machines, random forests, decision trees, etc. An example process for joining data and training a model 128 is illustrated in FIG. 4 and described in more detail below.

The model training system 120 can provide the trained model 128 to one or more entities. For example, the model training system 120 can provide the model 128 to one or more of the data owners 110 that provided a dataset used to train the model 128. In other examples, the model 128 can be executed within the clean room environment 122 to enhance the security of the model 128 and its execution.

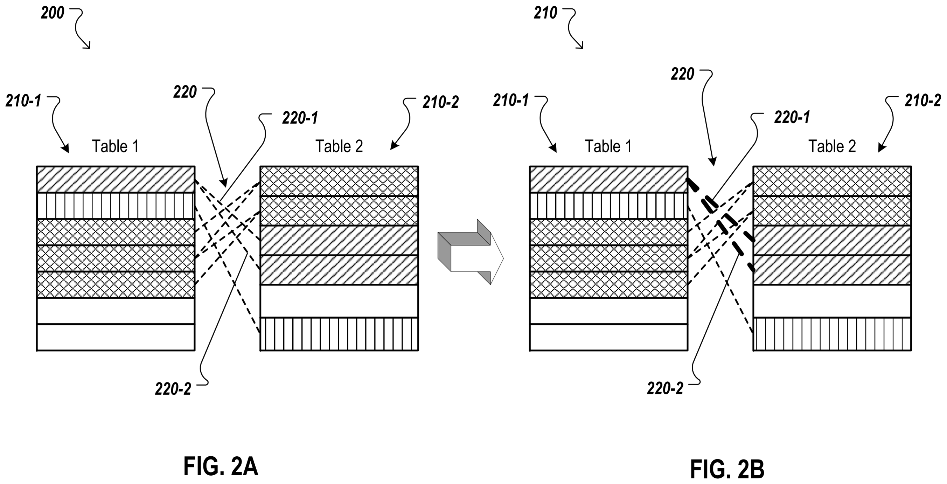

FIGS. 2A and 2B are diagrams 200 and 210 that illustrate user-level privacy in joined data. Referring to FIG. 2A, records (e.g., rows or columns) in a table 210-1 are joined with records of a table 210-2 by connections 220 that each connect a record in the table 210-1 with corresponding record in the table 210-2. For example, the top record in the table 210-1 is joined with the third and fourth records from the top in the table 210-2 using connections 220-1 and 220-2, respectively. In this example, the top record in the table 210-1 may have the same key (or correspond to the same key) as the third and fourth records in the table 210-2 such that the model trainer 126 joined those records using connections. Each record of a table can be joined with multiple records of the other table.

Each record of each table 210-1 and 210-2 can include data for a particular user. Thus, the connections 220 can connect records in both tables 210-1 and 210-2 for the same user. In other words, the top record in the table 210-1 and the third and fourth records in the table 210-2 can all include data for the same user. Since the second record in the table 210-1 is not connected to the third and fourth records in the table 210-2, the second record in the table 210-1 may not include data for the same user as the top record in the table 210-1 and the third and fourth records in the table 210-2.

Referring now to FIG. 2B, the connections 220-1 and 220-2 can be removed to inject noise into the joining of the tables 210-1 and 210-2. If the records include user data, this can be referred to as user-level privacy since all of the joining data (i.e., connections in this example) is removed for a given user. If the records represented items rather than users, this could be referred to as item-level privacy. In other examples, noise data can be added rather than, or in addition to, removing joining data for a given user. For example, a connection 220 can be added between a record for the given user in the table 210-1 and a record for a different user in the table 210-2.

The model trainer 126 can use the noised data of the diagram 210 to train a machine learning model 128 instead of the data of the diagram 200 such that the resulting model 128 protects the precise joining of the data in the tables 210-1 and 210-2. The amount of noise added by adding or removing connections 220 between the records in the tables 210-1 and 2102 can be determined based on a target level of differential privacy for the model 128. The target level of privacy can be defined by the zero-concentrated differential privacy (zCDP) parameter ($\rho$) that controls the privacy-utility trade-off.

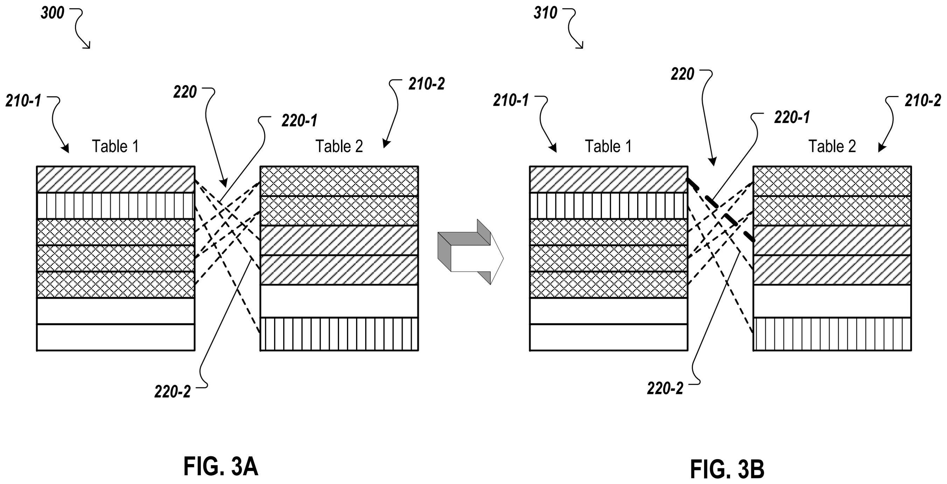

FIGS. 3A and 3B are diagrams 300 and 310 that illustrate event-level privacy in joined data. These figures are similar to those of FIGS. 2A and 2B with the exception that only one connection 220-1 is removed in the diagram 310 of FIG. 3B. In other words, only a portion of the connections for an individual may be removed to create noise in the joining data. This can be referred to as event-level privacy as the joining data for one or more events are removed rather than all of the joining data for a given user. In some examples, some but less than call connections 220 can be removed for multiple users in the tables 210-1 and 210-2 to create the noise in the joining data. Additionally, connections can be added to create the noise. For example, a connection can be added between the first record of the table 210-1 and the next to last record of the table 210-2 to add event-level noise since the event (and its user) of the next to last record of the table 201-2 was not associated with the user of the first record of the table 210-1.

The techniques described herein for training machine learning models 128 with noised joining data can be implemented for user-level privacy or event-level privacy. In other words, all or a portion of joining data can be removed for each of one more users (or other items) represented by the two or more datasets (e.g., tables) that are used to train the machine learning models 128. The noise can also be generated without adding or removing connections. For example, noise can be added during the model training process (e.g., to the gradients, the sufficient statistics, and/or other statistics derived from the joined data as part of the model training process) to achieve the differential privacy, as described below. One result of this model training is that an entity using the model 128 trained using the aligned tables 210-1 and 210-2 of FIG. 2B cannot differentiate between whether the tables 210-1 and 210-2 were aligned as shown in FIG. 2A or aligned as shown in FIG. 2B. Similarly, an entity using the model 128 trained using the aligned tables 210-1 and 210-2 of FIG. 3B cannot differentiate between whether the tables 210-1 and 210-2 were aligned as shown in FIG. 3A or aligned as shown in FIG. 3B.

FIG. 4 is a flow chart of an example process 400 of training a machine learning model using joined data while protecting the precise joining of the data. Operations of the process 400 can be performed, for example, by the model training system 120 of FIG. 1. The operations of the process 400 can also be implemented as instructions stored on a computer readable medium, which can be non-transitory. Execution of the instructions, by one or more data processing apparatus, causes the one or more data processing apparatus to perform operations of the process 400. For ease of subsequent description, the process 400 is described in terms of the model training system 120.

The process 400 provides an example of training a machine learning model using least-squares regression while protecting the precise joining of the data during machine learning model training. Similar techniques can be used to train other types of machine learning models.

The model training system 120 obtains datasets from two or more entities, e.g., two or more data owners (410). Each dataset can include data related to a set of individual users or items. For example, each data set can include a table with multiple rows, where each row includes data for an individual user or item. A table can include multiple rows for the same user or item. In other examples, the data for a user or item can be stored in a column, other data array, or other type of data structure such that there are individual records for each individual user or item.

One or more of the datasets can be public datasets meaning that any of the two or more entities can access the data in the dataset. However, the process 400 can protect the precise joining of the data in the obtained datasets. The datasets can also include private datasets that should not be shared with other entities.

The datasets can be received within the clean room computing environment 122 of the model training system 120. In this way, after the records of the datasets are joined/aligned, the confidentiality of the joining/aligning of the data is protected from (e.g., not revealed to) outside entities including the entities that provided the data that is joined.

For ease of subsequent description, the remaining operations of the process 400 are described in terms of two datasets $Y$ and $\mathcal{Z}$. However, the same techniques can be applied to more than two datasets. These two datasets can be public datasets that are visible to the analyst (e.g., the entity that trains and/or uses the machine learning model 128) or the designer of the techniques for training the model 128.

In addition to the public datasets $Y$ and $\mathcal{Z}$, the model training system 120 can obtain a set of keys (e.g., a list of keys) that are used to join the datasets $Y$ and $\mathcal{Z}$. The list of keys can be considered sensitive data rather than public data, meaning that one or more (e.g., all) of the entities that provided the public datasets $Y$ and $\mathcal{Z}$ do not have access to the list. If the records in the datasets $Y$ and $\mathcal{Z}$ are for users, the keys can be user identifiers U. For ease of subsequent description, user identifiers U will be used as the keys, although the same or similar operations can be performed for item identifiers when the records include data for non-user items. The list of keys can be represented as $X = \{(u, \Upsilon_u, Z_u)\}_{u \in U_X}$ where $U_X \subseteq U$ is a finite set of user identifiers (and $U$ is a set of possible identifiers).

Here, the $\Upsilon_u$ are subsets of $Y$ and the $Z_u$ are subsets of $\mathcal{Z}$, either of which may or may not disjoint subsets. The sets $\Upsilon_u$ and $Z_u$ may be empty, and their union need not cover the entire sets $Y$ and $\mathcal{Z}$. That is, there may be items in $Y$ that do not appear in any of the $\Upsilon_u$, and similarly for items in $\mathcal{Z}$. User $u$ is present in $X$ if either $\Upsilon_u$ or $Z_u$ is not empty, meaning either user $u$ is in $Y$ (as denoted by $\Upsilon_u$) or user $u$ is in $Z$ (as denoted by $Z_u$). For example, $Y$ could be a set of impressions (e.g., views of a digital component); $Z$ could be a set of conversions (e.g., completions of specified actions such as purchases following views of the digital component); and $\Upsilon_u$ and $Z_u$ are the set of impressions and conversions involving a particular account (or device or browser instance) $u \in U$. That is, $\Upsilon_u$ can represent the impressions involving the account for user identifier u and $Z_u$ can represent the conversions involving the account for user identifier $u$.

For fixed sets $Y$ and $\mathcal{Z}$, consider the following adjacency (or neighborhood) relations on data sets:

- User-level neighbors: Two data sets $X$ and $X'$ are neighbors if they are equal or if they differ by the addition or removal of one triple $(u, \Upsilon_u, Z_u)$. That is, $|X \Delta X'| = 1$. Here, $\Delta$ is the symmetric difference of sets.

- Event-level neighbors: Two data sets $X$ and $X'$ are $Y$-neighbors if they differ by the removal of one $Y$ from some individual's set. That is, there is one user such that $|\Upsilon_u \Delta \Upsilon_u'| = 1$, and all other sets are the same. $\mathcal{Z}$-neighbors can be defined similarly.

User-level adjacency is the standard "add/remove" notion of adjacency used when defining differential privacy, except that there is a constraint on the records since the $\Upsilon_u'$ s are assumed to be disjoint, as are the Z'$_u$s. Absent further specification, user-level adjacency is the default notion in the following description of the process 400. Given either of these notions of adjacency, privacy can be defined as is the standard for differential privacy - an algorithm $\mathcal{A}$ with range space $\mathcal{R}$ is $(\varepsilon, \delta)$-differentially private (DP) if the following is true for any two neighboring pairs of datasets $X$ and $X'$ and for S $\subseteq \mathcal{R}$ :

$$\Pr[\mathcal{A}(X) \in S] \le e^{\varepsilon} \Pr[\mathcal{A}(X') \in S] + \delta$$

In this relationship, $S$ represents all potential output of algorithm $\mathcal{A}$ that could be predicted, $\varepsilon$ is the differential privacy parameter that represents the maximum distance between a query on datasets $X$ and $X'$, $\delta$ is the differential privacy parameter that represents the probability of data accidentally being leaked, $\Pr[\mathcal{A}(X) \in S]$ represents the probability that the output of the algorithm $\mathcal{A}$ on dataset $X$ is within S and $\Pr[\mathcal{A}(X') \in S]$ represents the probability that the output of the algorithm $\mathcal{A}$ on dataset $X'$ is within $S$. This definition of privacy is flexible enough to operate with any of the neighborhood notions defined above. The choice of the exact notion of neighborhood can depend on the privacy use case.

The model trainer 126 of the model training system 120 joins the datasets (420). The model trainer 126 can use the list of keys to join records in dataset $Y$ with corresponding records in dataset $Z$. For example, if the keys are user identifiers, the model trainer 126 can identify records in in dataset $Y$ that include data for a user identified by a user identifier (e.g., records that include the user identifier $u$). Similarly, the model trainer 126 can identify records in dataset $Z$ that include data for the user identified by the user identifier (e.g., records that include the user identifier $u$). The model trainer 126 can then join the identified records of dataset $Y$ with the identified records in dataset $Z$ , e.g., using connectors between records in the tables or other joining data that maps joined records of the two datasets.

The model trainer 126 generates a loss function (430). Assume that the list of keys $X$ and the dataset $Z$ are public knowledge, i.e., known to the model trainer 126 in advance. Recall that the dataset is defined as = {(u, $\Upsilon_u$, $Z_u$)}$_{u \in U_X}$ where $U_X \subseteq U$ is a finite set of user identifiers; $\Upsilon_u \subset Y$ and $Z_u \subset Z$ are the subset of the records from $Y$ and $Z$ that are held by user u. Also assume that there is a given relation of acceptable pairs $\mathcal{R} \subseteq Y \times Z$ - these are pairs of records that could potentially be matched inside by the model trainer 126 - and a label (or response) algorithm $h : Z \longrightarrow \mathbb{R}$ that determines the label to be predicted to each record (that is, z is thought of as having two parts - a label $h(z)$ and an unlabeled part.

Let $D$ = {(y, z, h(z)) : (y, z) $\in \mathcal{R} \cap U_{u \in U_X}(\Upsilon_u \times Z_u)$}. The model trainer 126 is configured to learn a model 128 that, given a pair (y, z), predicts the label h(z). The label h(z) can represent which conversions and impressions of a digital component belong to the same user, which conversions should be attributed to which impression, which medical conditions belong to the same patient, and/or other joining of data of multiple datasets. In another example, the label h(z) can be whether a conversion occurred for a given impression (e.g., whether a given impression and a given conversion belong to the same user in the datasets), or whether a patient with a condition corresponding to the dataset $Y$ also has the condition corresponding to the dataset $Z$. The predicted label h(z) for an impression output by the model can be a prediction of whether an impression to a given user will result in a conversion or whether a patient having condition of dataset $Y$ will also have the condition of dataset $Z$. For this task to be meaningful, the model can be restricted to use the unlabeled part of z.

Consider two embeddings $f_{\phi_1} : X \longrightarrow \mathbb{R}^{d_1}$ and $g_{\phi_2} : Z \longrightarrow \mathbb{R}^{d_2}$ with parameters $\phi_1$ and $\phi_2$, where $g_{\phi_2}$ does not directly access the part of its input z containing h(z). Letting $\|$ denote vector concatenation and $\theta \in \mathbb{R}^{d_1 d_2}$, the regression goal can be expressed as follows:

- Goal: privately approximate arg min $\mathcal{L}(\theta; \phi_1 \phi_2)$ where:

Equation (1):

$$\mathcal{L}(\theta; \phi_1, \phi_2; D) = \sum_{(y,z,l) \in D} (l - \langle \theta, f_{\phi_1}(y) || g_{\phi_2}(z) \rangle)^2$$

Equation (2):

$$\mathcal{L}(\theta; \phi_1, \phi_2; D) = c_{D,\phi_1,\phi_2} + \theta^{\mathsf{T}}\left( \sum_{(y,z)\in D} \begin{bmatrix} f_{\phi_1}(y)\cdot f_{\phi_1}(y)^{\mathsf{T}} & f_{\phi_1}(y)\cdot g_{\phi_2}(z)^{\mathsf{T}} \\ g_{\phi_2}(z)\cdot f_{\phi_1}(y)^{\mathsf{T}} & g_{\phi_2}(z)\cdot g_{\phi_2}(z)^{\mathsf{T}} \end{bmatrix}\right)$$

Equation (3):

$$\mathcal{L}(\theta; \phi_1, \phi_2; D) = -2 \cdot \theta^{\mathsf{T}} \sum_{(y,z,l)\in D}\left( l \cdot \begin{bmatrix} f_{\phi_1}(y) \\ g_{\phi_2}(z) \end{bmatrix}\right).$$

The term $c_{D,\phi_1,\phi_2}$ refers to a quantity that does not depend on the optimization parameter $\theta$ and $\mathcal{L}(\theta; \phi_1, \phi_2; D)$ is the loss function. The parameter $\theta$ is the main parameter of the model and can represent the coefficients of a regression model. The coefficients can be estimated using a least squares procedure to minimize the sum of the squared errors. The parameters $\phi_1$, $\phi_2$ can represent the features and/or regressors used to predict the outcome.

The model trainer 126 injects noise (440) using noise gradients, sufficient statistics, and/or other derivatives computed from the loss function and the inputs, and trains the machine learning model 128 by updating model parameters with noised gradients, statistics, and/or other derivatives (450). In some implementations, the model trainer 126 uses the main routine and subroutines A and B described below to inject noise and update the model parameters. For example, the main routine can call the subroutines to perturb sufficient statistics (subroutine A) and/or to compute a noise matrix (subroutine B) that can be used to inject noise into the loss matrix, gradient matrix, covariance matrix, and/or the vectors $u$ and $v$. The main routine can update the model parameters based on these noised derivatives, e.g., until a training condition is satisfied. The derivatives can include sufficient statistics, gradients, and/or other derivatives computed using the loss function and/or inputs to the training process.

In some implementations, the model trainer 426 clips and noises the gradients, sufficient statistics, and/or other derivatives computed from the loss function and the inputs at (440) and updates the model parameters with the noised gradients, sufficient statistics, or other derivatives at (450). The amount of noise can be based on the target level of differential privacy defined by privacy parameter ($\rho$).

As shown in Equation 2, the loss function can be based on computations involving two embeddings $f_{\phi_1}(y)$ and $g_{\phi_2}(z)$ and transformations of those embeddings $f_{\phi_1}(y)^{\mathsf{T}}$ and $g_{\phi_2}(z)^{\mathsf{T}}$. Notably, two of the four computations include data from both datasets $Y$ and $Z$. The noise can be added to the joining data used in these computations (i.e., the top right and bottom left computations within the brackets of the summation), whereas noise may not be added to the computations that involve only one dataset, i.e., the top left and bottom right computations within the brackets of the summation.

The following training technique is based on a DP-alternating minimization (DP-AM) framework combined with DP-sufficient statistics perturbation (DP-SSP). The optimization algorithm can include a main routine that can include one or more subroutines, described below. Currently, the most computationally expensive part is the matrix factorization subroutine. Potentially, the computation can be approximated via simpler methods (e.g., streaming PCA). The main idea is to exploit the knowledge of the sets $Y$ and $\mathcal{Z}$ to better approximate the sufficient statistics for the loss in Equation (3) of the goal shown above. A core idea is to create finite sensitivity polytope based on the possible sensitivity vectors generated under $\mathcal{Z}$-neighborhood, and then add Gaussian noise based on the "smallest" ellipsoid (in diameter or a number of other measures) containing the sensitivity polytope.

In the main routine, the techniques for optimizing a loss function $R(\theta; D)$ with noisy full-gradient descent while ensuring $\rho$-zCDP for individual records in $D = \{d_1, d_2, ... ,\}$ is abstractly referred to as DP-GD.

To bound the influence of any one person's sensitive data, the number of records in $D$ that are associated with any one privacy unit can be limited. A bit more generally, the techniques can associate weights to records in $D$, and limit the total weight of any one privacy unit. In the $\mathcal{Z}$-event-level setting, we can partition the set $D$ according to the right-side records: for each $z \in \mathcal{Z}$, let $D_z = \{(y,z',l) \in D : z' = z\}$. A weight function w is defined by Equation (4) below:

Equation (4):

$$w(y, z, l) = w_{D,Z-event}(y, z, l) = \frac{1}{|D_z|}$$

For computational reasons, it can be preferred to have fewer records with non-zero weight. In fact, any weighting function will work as long as (a) the weights are computed independently for each set $D_z$, and (b) the weights add to at most 1 within each $D_z$. The uniform weighting in the weight function equation shown in the previous paragraph is a simple example that covers all the examples in $D$. Such weights can be referred to as event-bounded.

The weights can be incorporated in a few different ways. One way is to minimize the weighted loss:

$$\mathcal{L}\big(\theta, \phi_1, \phi_2; (D, w)\big) = \sum_{(y,z,l) \in D} w(y, z, l)(l - \langle \theta, f_{\phi_1}(y) || g_{\phi_2}(z) \rangle)^2$$

Main Routine - $\mathcal{A}_{DP-AM}$ DP-Alternating Minimization Framework

In the main routine, the input data includes dataset: $X = \{(u, Y_u, \mathcal{Z}_u) : u \in U_x\}$, loss function: $\mathcal{L}(\theta; \phi_1, \phi_2; \cdot)$, zCDP parameter: $p$ (target privacy parameter), number of alternations: $T$, and acceptable pairs: $\mathcal{R}$. The output is model parameters $\theta, \phi_1, \phi_2$. In the main routine, the model trainer 126 creates the dataset $D$ as $D \leftarrow \{(y, z, h(z)) : (y,z) \in \mathcal{R} \cap U_{u \in U_x} Y_n(Y_u, Z_u)\}$. The model trainer 126 also determines weights w as event-bounded weights using the weight function equation shown above as Equation (4).

The model trainer 126 can initiate parameters $\theta^{(0)}, \phi_1^{(0)}, \phi_2^{(0)}$ to initial values and then perform the following operations to determine the model parameters $\theta, \phi_1, \phi_2$:

(1) For $t \in \{0, ..., T - 1\}$, do:

$$\phi_1^{(t+1)}, \phi_2^{(t+1)} \leftarrow DP - GD\left(loss = \mathcal{L}\left(\theta^{(t)}; \phi_1^{(t)}, \phi_2^{(t)}; (D, w)\right), zCDP\right.$$

$$= \frac{\rho}{2}, keep - fixed = \theta^{(t)}$$

$$\theta^{(t+1)} \leftarrow \mathcal{A}_{ConJoin}^{SSP}\left(loss = \mathcal{L}\left(\cdot; \phi_1^{(t)}, \phi_2^{(t)}; (D, w)\right), zCDP = \frac{\rho}{2}, fixed\right.$$

$$= \phi_1^{(t+1)}, \phi_2^{(t+1)}, pairs = \mathcal{R}\right)$$

(2) End

In this main routine, the model trainer 126 runs a loop for $T$ iterations to update the parameters $\phi_1, \phi_2$ and the parameters $\theta$. The parameters $\phi_1, \phi_2$ are updated by applying Differentially Private Gradient Descent (DP-GD), e.g., DG-SPD, on the loss function, while maintaining fixed parameters $\theta$. In general, DP-GD is a modification of a gradient descent algorithm that enables the training of machine learning models with privacy guarantees according to differential privacy parameters. Typically, this is achieved by clipping gradients to limit the influence of each data point and adding noise, e.g., Gaussian noise, to the clipped gradients before updating the model parameters. The clipping can include clipping each individual gradient to a maximum norm before aggregating the gradients. The noise can then be added to the aggregated, clipped gradient. The privacy loss can accumulate over the training process.

Next, this main routine updates the main parameters $\theta$ using subroutine A, described below, e.g., by calling

$$\mathcal{A}_{ConJoin}^{SSP}.$$

This is done by perturbing the sufficient statistics of the model, while keeping the newly updated parameters $\phi_1$, $\phi_2$ fixed. This main routine repeats $T$ times, alternating between refining the parameters $\phi_1$, $\phi_2$ and the main parameters $\theta$, ensuring that the entire process adherers to the specified differential privacy parameter ($\rho$).

Subroutine A -

$$\mathcal{A}_{ConJoin}^{SSP}$$

: Sufficient Statistics Perturbation under DP-ConJoin

In subroutine A, the model trainer 126 perturbs the sufficient statistics of the model using data clipping and event-bounded weights. This can be used to find the optimal parameter $\theta$ in a differentially private manner by perturbing the sufficient statistics of a least-squares regression problem.

In subroutine A, the input data includes: loss function: $\mathcal{L}(\cdot; \phi_1, \phi_2; D)$, zCDP parameter: $\rho$, fixed states: $\phi_1, \phi_2$, sets: $(U_X, \mathcal{Z})$. The output of this subroutine is model parameters $\hat{\theta}$.

1.

$$\begin{bmatrix} A & C^{\mathsf{T}} \\ C & B \end{bmatrix} \leftarrow \sum_{(y,z) \in D} \begin{bmatrix} f_{\phi_1}(y) \cdot f_{\phi_1}(y)^{\mathsf{T}} & f_{\phi_1}(y) \cdot g_{\phi_2}(z)^{\mathsf{T}} \\ g_{\phi_2}(z) \cdot f_{\phi_1}(y)^{\mathsf{T}} & g_{\phi_2}(z) \cdot g_{\phi_2}(z)^{\mathsf{T}} \end{bmatrix}, \qquad \begin{bmatrix} u \\ v \end{bmatrix} \leftarrow \sum_{(y,z,l) \in D} \left( 2l \cdot \begin{bmatrix} f_{\phi_1}(y) \\ g_{\phi_2}(z) \end{bmatrix} \right)$$

2. Set $A_{\mathrm{priv}} \leftarrow A$

3. Let

$$\mathcal{Y}_X = \{y : y \in U_X\} \text{ and } \mathcal{R}_X = (\mathcal{Y}_X \times \mathcal{Z}) \cap \mathcal{R}$$

4. Set $B_{\mathrm{priv}} \leftarrow$

$$\sum_{(y,z) \in \prod_k \mathcal{R}_X} g_{\phi_2}(z) \cdot g_{\phi_2}(z)^{\mathsf{T}}$$

5. Sensitivity polytype for covariance:

$$\mathcal{W}_{cov} \leftarrow \{\pm g_{\phi_2}(z) f_{\phi_1}(y)^{\mathsf{T}} : (y, z) \in \mathcal{R}_X\}$$

6. Sensitivity polytype for linear:

$$\mathcal{W}_{lin} \leftarrow \left\{ \pm 2l \cdot \begin{bmatrix} f_{\phi_1}(y) \\ g_{\phi_2}(z) \end{bmatrix} : (y, z) \in \mathcal{R}_X, l = h(z) \right\}$$

7.

$$C_{\mathrm{priv}} \leftarrow C + \mathcal{A}_{MF}\left(\mathcal{W}_{cov}, \frac{\rho}{2k^2}\right), \text{ and } \begin{bmatrix} u_{priv} \\ v_{priv} \end{bmatrix} \leftarrow \begin{bmatrix} u \\ v \end{bmatrix} + \mathcal{A}_{MF}\left(\mathcal{W}_{lin}, \frac{\rho}{2k^2}\right)$$

8.

$$\hat{\theta} \leftarrow \arg\min \theta^\top \begin{bmatrix} A_{\text{priv}} & C^\top_{\text{priv}} \\ C_{\text{priv}} & B_{\text{priv}} \end{bmatrix} \theta - \theta^\top \begin{bmatrix} u_{\text{priv}} \\ v_{\text{priv}} \end{bmatrix}$$

In step (1), a block matrix $\begin{bmatrix} A & C^\top \\ C & B \end{bmatrix}$ is computed. The block matrix can be a large block matrix of sufficient statistics for the model. This block matrix can be the sum of the outer products of the feature vectors $f(y)$ and $g(z)$. This can be equivalent to the sum-of-squares matrix in a standard regression. The matrix A is the top-left block of the block matrix. The matrix A is calculated by summing the outer product of the feature vector $f(y)$ with itself over all data pairs. The matrix A captures the relationships within the first dataset $Y$.

The matrix B is the bottom-right block of the block matrix. The matrix B is calculated by summing the outer product of the feature vector $g(z)$ with itself over all data pairs. The matrix B captures the relationships with the second dataset $Z$.

The matrix C is the bottom-left block of the block matrix and its transpose matrix $C^\top$ is the top-right block of the block matrix. The matrix C is calculated by summing the outer product of the feature vector $g(z)$ with the feature vector $f(y)$. The matrix C captures the cross-interactions between the two datasets. Because it depends on the joining of records from both datasets, it is treated as the sensitive component that requires privatization by adding noise.

A linear vector $\begin{bmatrix} u \\ v \end{bmatrix}$ is also computed. This vector is the sum of the feature vectors weighted by the labels $l$. This is the linear term in the regression.

This subroutine isolates the sensitive components and treats the components that rely only on a single dataset (A and B) as public or non-sensitive ($A_{\text{priv}}$ and $B_{\text{priv}}$). The components that depend on the joining of the two datasets - the cross-term matrix $C$ and the linear vector $\begin{bmatrix} u \\ v \end{bmatrix}$ are identified as sensitive and should be privatized.

Here, $A_{\text{priv}}$, which is the private version of the matrix A, is equal to the matrix A since it is non-sensitive. The matrix $B_{\text{pri}}$ is also treated as non-sensitive and is calculated over the known acceptable pairs, without adding noise. Thus, in this example, no noise may be added to matrices $A_{\text{pri}}$ and $B_{\text{pri}}$ since they each represent sufficient statistics computed using only one of the datasets. Instead, noise is only added to the cross-term matrix $C$ and its transpose $C^T$. This enables the joining to remain private with differential privacy guarantees, while limiting the amount of noise added to the model such that the outputs of the model are more accurate.

To determine how much noise to add, the subroutine defines the sensitivity for the sensitive components. This is done by creating two polytopes (geometric shapes) that represent the maximum possible change to the cross-term matrix $C$ and the linear vector $\begin{bmatrix} u \\ v \end{bmatrix}$ that could be caused by adding or removing a single data point from the joined dataset in steps (5) and (6).

In step (7), noise is added only to the sensitive components calculated in step (1). In particular $C_{\text{priv}}$ is calculated by adding noise to cross-term matrix $C$. In addition, $u_{\text{priv}}$ is calculated by adding noise to u and $v_{\text{priv}}$ is calculated by adding noise to v. The noise can be added using subroutine B, described below, by calling $\mathcal{A}_{MF}$ with input parameters for subroutine B. In general, subroutine B uses matrix factorization to the determine the noise added to these statistics.

In step (8), the final private model parameters $\hat{\theta}$ are calculated by solving the least-squares optimization problem, but using the combination of the non-sensitive statistics ($A_{\text{priv}}$ and $B_{\text{priv}}$ and the newly noised private statistics ($C_{\text{priv}}$, $u_{\text{priv}}$, and $v_{\text{priv}}$).

In some implementations, subroutine A can be implemented based on DP-GD described in "Deep Learning with Differential Privacy" by Martin Abadi et al, published in CCS '16: Proceedings of the 2016 ACM SIGSAC Conference on Computer and Communications Security, which is incorporated herein by reference.

Subroutine B: $\mathcal{A}_{MF}$ : Generating Noise via Matrix Factorization

In subroutine B, the input data includes: Sensitivity polytope: $\mathcal{W}$ (e.g., as computed in subroutine A) and zCDP parameter: $\rho$. The output of subroutine B is a noise matrix N. The sensitivity polytope $\mathcal{W}$ is a geometric object that represents all possible changes to a statistic that could be caused by adding or removing a single individual's data.

To compute the noise matrix N, the model trainer 126 computes L, R $\leftarrow$ compute $\gamma_2$ factorization for the sensitivity polytope $\mathcal{W}$, where $\|R\|_{1\to2} = 1$. In other words, this subroutine can write a matrix M whose columns are the vector in $\mathcal{W}$ and find $\arg\min \|L\|_{2\to\infty}\|R\|_{1\to2}$ and normalize so that $\|R\|_{1\to2} = 1$. Then the noise matrix N is computed as

$$N \leftarrow \mathcal{N}\left(0, \frac{1}{2\rho} \cdot L\right).$$

The core of this subroutine is to factor the sensitivity polytope $\mathcal{W}$. The subroutine finds two matrices, *L* and *R,* that are a $\gamma_2$ factorization of $\mathcal{W}$. This is an optimization problem that seeks to decompose the vectors in $\mathcal{W}$ into *L* and *R* while minimizing a specific combination of their matrix norms. The matrix *R* is normalized such that its $1 \rightarrow 2$ norm is equal to 1.

The final noise matrix N is generated by drawing from a multivariate normal (Gaussian) distribution. The mean of the distribution is a zero matrix. The covariance structure of the noise is determined by the matrix *L* from the factorization step, scaled by the privacy parameter, e.g., using $\left(\frac{1}{2\rho}\right) * L$. In essence, the subroutine uses matrix factorization to find an optimal structure *L* for the noise, which is then scaled by the privacy parameter ($\rho$) and used to generate the final random noise matrix N.

The noise matrix N is applied during the training to the covariance matrix $\mathcal{W}_{cov}$ (e.g., for computing $C_{priv}$) and/or to the vectors u and v, e.g., as shown in step 7 of subroutine A. The model trainer 126 can be configured to call subroutine B to compute the noise matrix to be added to the covariance matrix $\mathcal{W}_{cov}$ and/or to the vectors u and v in subroutine A.

After training the model using the process 400, the model can be used to generate inferences without revealing the joining of the datasets per differential privacy guarantees defined by the privacy parameter ($\rho$).

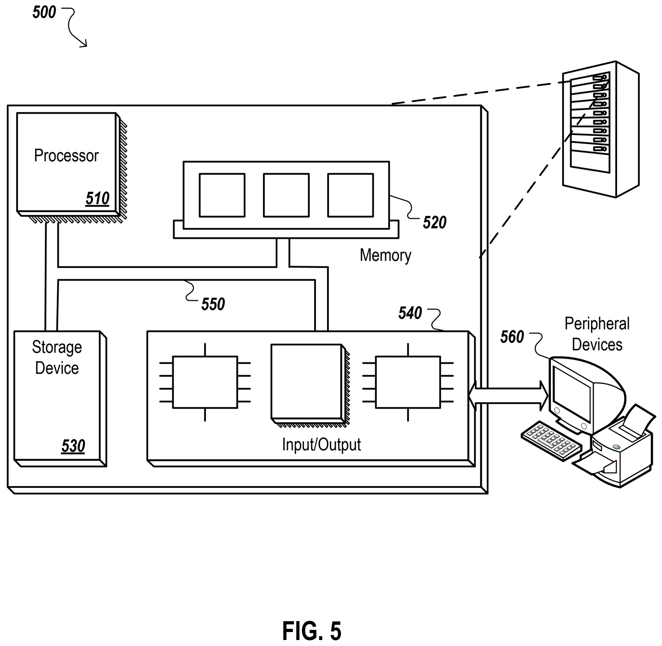

FIG. 5 is a block diagram of an example computer system 500 that can be used to perform operations described above. The system 500 includes a processor 510, a memory 520, a storage device 530, and an input/output device 540. Each of the components 510, 520, 530, and 540 can be interconnected, for example, using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 can include, for example, a hard disk device, an optical disk device, a storage device that is shared over a network by multiple computing devices (e.g., a cloud storage device), or some other large capacity storage device.

The input/output device 540 provides input/output operations for the system 500. In one implementation, the input/output device 540 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 560. Other implementations, however, can also be used, such as mobile computing devices, mobile communication devices, set-top box television client devices, etc.

Although an example processing system has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

**Claims**

1. A method, comprising:

   obtaining two or more datasets, wherein each dataset is received from a different entity that maintains the dataset;
   joining the two or more datasets using a set of keys;
   generating a loss function for training a machine learning model based on inputs comprising the joined two or more datasets, the machine learning model comprising a plurality of model parameters;
   injecting noise into one or more derivatives computed from the loss function, the inputs, or both, wherein each derivative of the one or more derivatives is a derivative derived using a joining of the two or more datasets; and
   updating the plurality of model parameters using the noised one or more derivatives.

2. The method of claim 1, wherein the one or more derivatives comprises (i) one or more noised gradients, (ii) one or more sufficient statistics, or both (i) and (ii).

3. The method of claim 1 or 2, further comprising clipping at least one of the one or more derivatives.

4. The method of any preceding claim, wherein injecting noise into one or more derivatives comprises computing a noise matrix using matrix factorization.

5. The method of claim 4, wherein injecting the noise comprises applying the noise matrix to one or more of (i) a loss matrix, (ii) a gradient matrix, (iii) a covariance matrix, or (iv) vectors that represent the two or more datasets.

6. The method of claim 5, wherein the covariance matrix represents a sensitivity polytype.

7. The method of any preceding claim, wherein injecting the noise comprises:

   computing a first sensitivity matrix for covariance;
   computing a second sensitivity matrix for linear; and
   applying noise to the first sensitivity matrix and to the second sensitivity matrix.

8. The method of claim 7, wherein updating the plurality of model parameters comprises updating the model parameters based on the noised first matrix and the noised second matrix.

9. The method of any preceding claim, wherein each dataset of the two or more datasets comprises recordings that include user data and the set of keys comprises user identifiers.

10. The method of any preceding claim, wherein injecting noise into one or more derivatives computed from the loss function, the inputs, or both comprises:

    computing first sufficient statistics using a first dataset of the two or more datasets;
    computing second sufficient statistics using a second dataset of the two or more datasets;
    computing third sufficient statistics using both the first dataset and the second dataset;
    injecting noise into the third sufficient statistics without injecting noise into the first or second sufficient statistics.

11. The method of any preceding claim, wherein injecting noise into one or more derivatives computed from the loss function, the inputs, or both comprises:

    computing first derivatives of the one or more derivatives using a first dataset of the two or more datasets;
    computing second derivatives of the one or more derivatives using a second dataset of the two or more datasets;
    computing third derivatives of the one or more derivatives using both the first dataset and the second dataset;
    injecting noise into the third derivatives without injecting noise into the first or second derivatives.

12. A system comprising:

    one or more processors; and
    one or more storage devices storing instructions that, when executed by the one or more processors, cause the one or more processors to carry out the method of any preceding claim.

13. A computer readable storage medium carrying instructions that, when executed by one or more processors, cause the one or more processors to carry out the method of any one of claims 1 to 11.

14. A computer program product comprising instructions which, when executed by one or more computers, cause the one or more computers to carry out the steps of the method of any of claims 1 to 11.

**FIG. 1**

FIG. 2A

FIG. 2B

210-2

220-1

Table 2

220

310

Table 1

210-1

220-2

**FIG. 3B**

210-2

220-1

Table 2

220

Table 1

210-1

300

220-2

**FIG. 3A**

400

| Obtain datasets | 410 |

↓

| Join datasets | 420 |

↓

| Generate loss function | 430 |

↓

| Inject noise using noise gradients, sufficient statistics, and/or other derivatives computed from the loss function and the inputs | 440 |

↓

| Update other model parameters with noised gradients, statistics, and/or other derivatives | 450 |

## FIG. 4

**FIG. 5**

**EP 4 726 609 A1**

# EUROPEAN SEARCH REPORT

Application Number

EP 25 20 8097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/073677 A1 (PETERSON DANIEL [US] ET AL) 11 March 2021 (2021-03-11) * paragraph [0150] - paragraph [0151]; claims 1,5,6 * | 1-14 | INV. G06N3/084 G06N20/00 |
| A | RUNHUA XU ET AL: "Privacy-Preserving Machine Learning: Methods, Challenges and Directions", ARXIV.ORG, CORNELL UNIVERSITY LIBRARY, 201 OLIN LIBRARY CORNELL UNIVERSITY ITHACA, NY 14853, 22 September 2021 (2021-09-22), XP091049970, * section 5.2.5 * | 1-14 | |
| A | TRAN ANH-TU ET AL: "A comprehensive survey and taxonomy on privacy-preserving deep learning", NEUROCOMPUTING, ELSEVIER, AMSTERDAM, NL, vol. 576, 1 February 2024 (2024-02-01), XP087471032, ISSN: 0925-2312, DOI: 10.1016/J.NEUCOM.2024.127345 [retrieved on 2024-02-01] * section 3.1; figure 4; table 2 * | 1-14 | TECHNICAL FIELDS SEARCHED (IPC) G06N G06E |

The present search report has been drawn up for all claims

| Place of search | Date of completion of the search | Examiner |
|---|---|---|
| Munich | 10 February 2026 | Thielemann, Benedikt |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................
& : member of the same patent family, corresponding
    document

EPO FORM 1503 03.82 (P04C01)

21

## ANNEX TO THE EUROPEAN SEARCH REPORT
## ON EUROPEAN PATENT APPLICATION NO.

EP 25 20 8097

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | Publication date | Patent family member(s) | Publication date |
|---|---|---|---|
| US 2021073677 A1 | 11-03-2021 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARTIN ABADI et al.** Deep Learning with Differential Privacy. *CCS '16: Proceedings of the 2016 ACM SIGSAC Conference on Computer and Communications Security*